# EUROPEAN PATENT SPECIFICATION

(11) **EP 3 805 152 B1**
(45) Date of publication and mention of the grant of the patent: **06.09.2023**
(21) Application number: 19814319.0
(22) Date of filing: 23.05.2019
(51) Int. Cl.: C01B 21/072, C09C 1/40, C09C 3/06, C09C 3/00, C09C 3/04, C09C 3/10, C08K 9/02, C09K 5/14

(54) **METHOD FOR PRODUCING GLASS-COATED ALUMINUM NITRIDE PARTICLES, AND METHOD FOR PRODUCING HEAT-DISSIPATING RESIN COMPOSITION CONTAINING SAID GLASS-COATED ALUMINUM NITRIDE PARTICLES**
VERFAHREN ZUR HERSTELLUNG VON GLASBESCHICHTETEN ALUMINIUMNITRIDPARTIKELN UND VERFAHREN ZUR HERSTELLUNG EINER WÄRMEABLEITENDEN HARZZUSAMMENSETZUNG, DIE DIESE GLASBESCHICHTETEN ALUMINIUMNITRIDPARTIKEL ENTHÄLT
PROCÉDÉ DE PRODUCTION DE PARTICULES DE NITRURE D'ALUMINIUM SOUS REVÊTEMENT DE VERRE ET PROCÉDÉ DE PRODUCTION D'UNE COMPOSITION DE RÉSINE DE DISSIPATION DE CHALEUR CONTENANT LESDITES PARTICULES DE NITRURE D'ALUMINIUM SOUS REVÊTEMENT DE VERRE

(30) Priority: 06.06.2018 JP 2018108803
(43) Date of publication of application: 14.04.2021
(73) Proprietor: Resonac Corporation, Tokyo (JP)
(72) Inventor: OTSUKA Yuki, Yokohama-shi, Kanagawa 221-8571 (JP); OKAMOTO Hidetoshi, Yokohama-shi, Kanagawa 221-8571 (JP)
(74) Representative: Strehl Schübel-Hopf & Partner
(86) International application number: PCT/JP2019/020437
(87) International publication number: WO 2019/235234

(56) References cited:
- WO-A1-2012/098735
- JP-A- H0 616 477
- JP-A- H0 616 477
- JP-A- 2003 128 956
- JP-A- 2014 031 484
- JP-A- 2014 195 780
- US-A- 5 234 712

## Description

### TECHNICAL FIELD

The present invention relates to a method of producing aluminum nitride particles having excellent moisture resistance, and to a heat-dissipating resin composition comprising these aluminum nitride particles. In particular, the present invention relates to a method of producing a filler used in a thermal interface material (TIM) such as a heat-dissipating sheet, phase change sheet, grease, heat-dissipating gel or adhesive agent required for heat-dissipation needs such as consumer products, automobile applications and industrial equipment, and to a method of producing a heat-dissipating resin composition using this filler.

### BACKGROUND ART

In the field of heat dissipation materials, with a focus on fields such as automotive applications and IGBT applications which are moving towards higher electric currents and higher power, demand for high performance materials with high thermal conductivity is increasing. As a filler used for a thermal interface materials (TIM) such as those intended for heat-dissipating sheets for power modules, there have been high expectations for aluminum nitride, which has excellent high thermal conductivity and electric insulation. However, with progress towards higher power and miniaturization in fields such as electronic components, the assurance of reliability has become stringent, and there is the possibility of concern arising for the moisture resistance of aluminum nitride. Namely, aluminum nitride, by reacting with moisture, generates ammonia by hydrolysis, and becomes degraded to aluminum hydroxide, which has a low thermal conductivity. There is the possibility that in the case of use as a filler in heat dissipation sheets, heat dissipation grease, or as an encapsulant of electronic components, the generated ammonia will exert an effect on the moisture resistance of electrical and electronic components.

Therefore, various studies have been carried out so far in order to improve the moisture resistance of aluminum nitride. A method of coating a layer of a silicate ester on a surface of an aluminum nitride particle, and after this, forming on the surface a layer consisting of Si-Al-O-N by firing at a temperature of 350 to 1000°C (Patent Document 1); or similarly, aluminum nitride particles with a coating layer formed on the surface, by surface treating with a silicate treatment agent and a coupling agent, and after this, carrying out a high temperature heat treatment (Patent Document 2); or furthermore, aluminum nitride particles having improved attachment to a resin due to remaining organic groups, by surface treatment with a silicate treatment agent, and after this, heat treating at a temperature not exceeding 90°C (Patent Document 3), have been disclosed. Further, it has also been disclosed to improve the moisture resistance by surface-modified aluminum nitride particles using a specified acidic phosphate ester (Patent Document 4), and all of these disclosures improve the moisture resistance, but the level is not sufficient, and there are many cases where the coatings used as a means of improving the moisture resistance reduce the inherent thermal conductivity of the aluminum nitride.
Patent Document 1:JP3446053B
Patent Document 2:JP4088768B
Patent Document 3:JP4804023B
Patent Document 4:JP2015-71730A

JP 2014 031484 A discloses a polyamic acid containing composition which comprises aluminum nitride having a Si-Al-ON layer formed on the surface, or aluminum nitride surface-treated with an organic silicon-based coupling agent or a titanate-based and aluminate-based coupling agent as an insulating heat conductive filler.

WO 2012/098734 A1 discloses a liquid crystal resin composition in which aluminum nitride composite particles are dispersed in a liquid crystal epoxy resin having a mesogen, wherein the aluminum nitride composite particles have an α-alumina layer formed on a surface of aluminum nitride particles.

JP H06 16477 discloses a ceramic which has a low dielectric constant and high thermal conductivity and can be calcined at a low temperature by using crystal particles consisting of pulverized particles of an aluminum nitride sintered body having a surface oxide layer.

### DISCLOSURE OF THE INVENTION

### Problems to be Solved by the Invention

Accordingly, the present invention has the object of providing a method of producing aluminum nitride particles maintaining an inherently high thermal conductivity, and which are also excellent in moisture resistance, as a filler for heat-dissipating material applications used in the electric/electronics fields. Further, the present invention has the object of providing a heat-dissipating resin composition using these aluminum nitride particles.

### Means for Solving the Problems

The present inventors, as a result of diligent study, discovered that the above objective can be achieved by coating aluminum nitride particles using a composition comprising a specified glass component by a specified method, and thereby completed the present invention. The present invention is set out in the appended claims.

### Effects of the Invention

According to the present invention, is it possible to provide a method of producing aluminum nitride particles which maintain their inherent high thermal conductivity, and have excellent moisture resistance, as a filler for heat-dissipating material applications used in the electric/electronics field, and to provide a method of producing a heat-dissipating resin composition using these aluminum nitride particles.

### BRIEF DESCRIPTION OF THE DRAWINGS

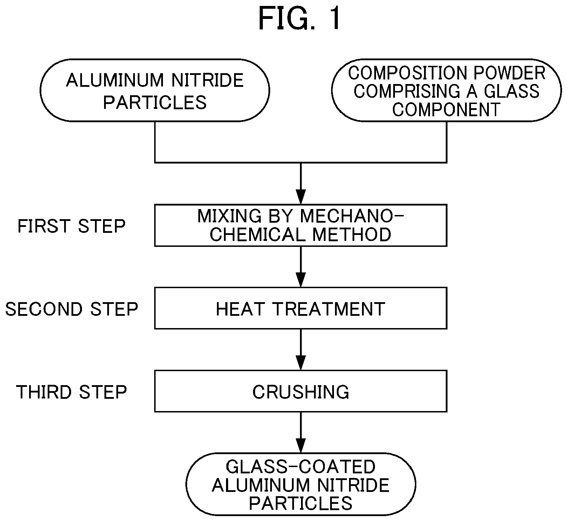

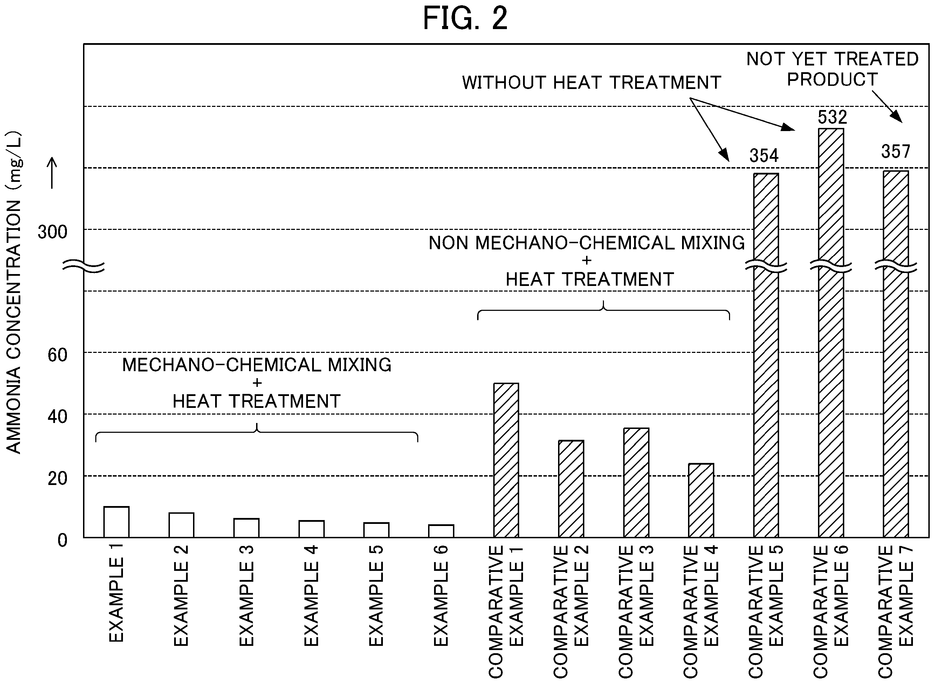

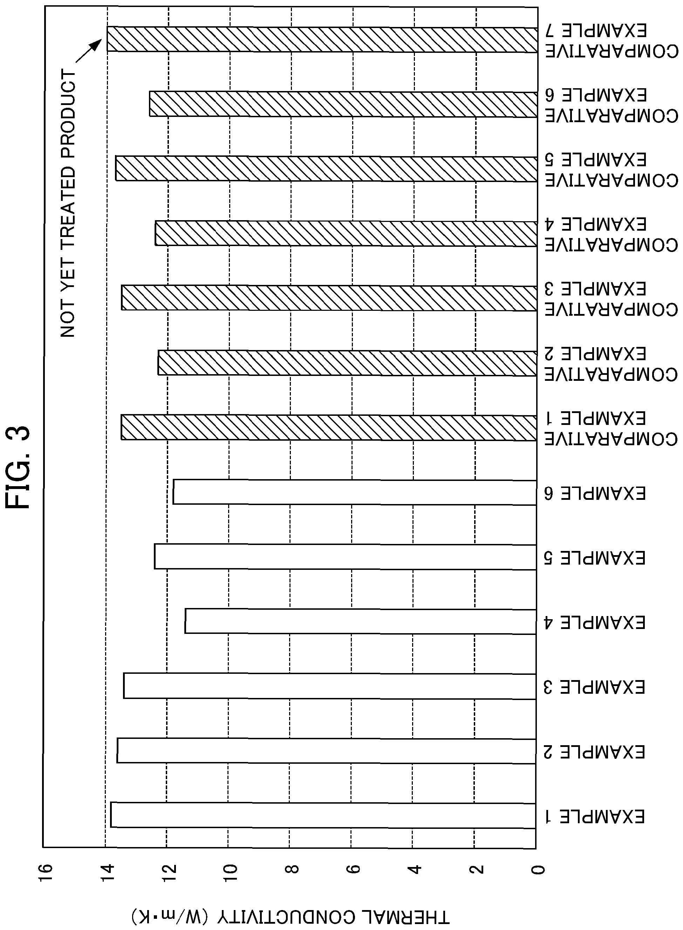

Fig. 1 is a manufacturing process diagram of the glass-coated aluminum nitride particles. Fig. 2 shows the evaluation results concerning the moisture resistance of the glass-coated aluminum nitride particles. Fig. 3 shows the evaluation results concerning the thermal conductivity of the glass-coated aluminum nitride particles.

### PREFERRED MODE FOR CARRYING OUT THE INVENTION

Below, the present invention is explained in detail.

### [Aluminum Nitride Particles]

As the aluminum nitride particles which can be used as the raw material of the glass-coated aluminum nitride particles of the present invention, well-known ones such as commercial products may be used. The production method of the aluminum nitride particles is not particularly limited, and for example, there is a direct nitriding method of directly reacting metal aluminum powder and nitrogen or ammonia, or a reduction nitriding method of carrying out a nitriding reaction when carbon-reducing alumina while heating in a nitrogen or ammonia atmosphere. Further, it is possible to use particles made into granular form by sintering an aggregate of aluminum nitride fine particles. In particular, it is possible to suitably use sintered granules having a high purity aluminum nitride with a cumulative volume d50 on the order of 1 µm. Herein, a high purity aluminum nitride is particles with a very low oxygen content, and extremely few metallic impurities. Specifically, it is suitable that the oxygen content is 1 weight% or less, and the total amount of metal atoms other than the aluminum is 1000 weight ppm or less, in order to obtain favorable thermal conductivity. These aluminum nitride particles may be used alone, or may be used in combination.

The shape of the aluminum nitride particles used in the present invention is not particularly limited, and intangible (crushed shape) or spherical or mixtures thereof may be appropriately used. In the case of use dispersed in a resin as a filler of a heat-dissipating material, the higher the volume ratio (filling amount) of the aluminum nitride particles, the higher the thermal conductivity becomes, and therefore a particle shape which is close to spherical, which has a low increase of the viscosity by addition of the aluminum nitride particles, is preferable. When expressed as an aspect ratio indicating the particle shape, it is preferably in a range of 0.8 to 1.0, more preferably in a range of 0.9 to 1.0. Herein, the aspect ratio is defined as the arithmetic mean value of the ratio (D1/D2) where the short diameter (D1) and the long diameter (D2) are respectively measured with an electron micrograph image for 100 randomly extracted particles.

The cumulative volume d50 of the aluminum nitride particles used in the present invention is in the range of 10 to 200 µm, more preferably 30 to 100 µm. The reason for this is that particles of 10 µm or more readily form a uniform glass coating, which is effective for increasing the moisture resistance. Further, if the particles are 200 µm or less, in the case of use of the aluminum nitride particles after glass coating as a filler of a heat-dissipating material installed in a power system electronic component, it is possible to provide a heat-dissipating material having a thin minimum thickness.

The cumulative volume d50 of the various particles used in the present invention is a value obtained from a particle size distribution by a laser diffraction dispersion method. Herein, the cumulative volume d50 expresses the particle diameter when the integrated value of the cumulative volume with respect to the particle distribution becomes 50%. Specifically, the measurement can be made using a laser diffraction/dispersion type particle size distribution measuring apparatus (Microtrac MT3300EX2: produced by MicrotracBEL Corp.).

### [Composition Powder Comprising Glass Component]

As the composition powder comprising the glass component used as a raw material of the glass-coated aluminum nitride particles of the present invention, it is preferable to contain 80 weight% or more of the glass component, and 90 weight% or more is more preferable. The glass component is not particularly limited, but commercial silicate glass and borosilicate glass may be used, and one containing two components or more selected from SiO₂, Al₂O₃, and B₂O₃ is preferable. To reduce the melting point in order to lower the heat treatment temperature when coating in the later described second step, a bismuth-based glass, a tin-phosphate based glass, a vanadium-based glass, a lead-based glass or the like may be used, but based on WEEE and RoHS directives, from the viewpoint of voluntary risk assessment of lead, bismuth-based glass, tin-phosphate based glass, and vanadium-based glass are preferable. Furthermore, in order to reduce the thermal expansion coefficient from in view of the properties, it is preferable to include a ZnO component. Further, from the viewpoint of moisture resistance, a small content of oxides of alkali metals such as Na₂O, K₂O is preferable. Furthermore, optional components such as CaO, SrO, MgO, BaO, SnO may be included. The total amount of the components selected from SiO₂, Al₂O₃, and B₂O₃ preferably has a ratio of 30 to 95 weight% with respect to the whole composition powder comprising the glass component. With 30 weight% or more a favorable coating property is shown, and with 95 weight% or less, the effects of the other components are effectively exhibited.

As the composition powder comprising the glass component, a well known one such as a commercial product glass frit may be used. Generally, a glass frit has alumina, silica, calcium oxide, magnesium oxide as raw materials, and is produced by compounding these, melting in a glass melting furnace, and after cooling, wet crushing or dry crushing to a powder. The temperature of the melting step differs depending on the type of glass, and is by and large 800°C to 1600°C. Among glass frits, those which are used for mobile phone substrates, vehicle substrates, or conductive pastes of solar electric cells, or encapsulation/sealing applications of various electric/electronic component may be suitably used.

The cumulative volume d50 of the composition powder comprising the glass component is in the range of 0.3 to 50 pm, more preferably 1 to 5 µm. The reason for this is that by making the cumulative volume d50 0.3 µm or more, the composition comprising the glass component readily becomes uniformly distributed without agglomeration at the surface of the aluminum nitride particle, and as a result a uniform glass coating film can be obtained. Further, by making the cumulative volume d50 50 µm or less, a uniform glass coating film can be obtained without slipping of the composition comprising the glass component adhered to the surface. The d50 is measured by the same method as for the aluminum nitride particles.

The composition powder comprising the glass component used in the present invention is preferably in a range of 0.1 to 5.0 parts by weight with respect to 100.0 parts by weight of the aluminum nitride particles, more preferably 0.2 to 4.0 parts by weight, and even more preferably 0.5 to 3.0 parts by weight. The reason for this is that with 0.1 parts by weight or more the glass coating of the aluminum nitride particles becomes sufficient, and by making it 5.0 parts by weight or less, it is possible to suppress a reduction of the thermal conductivity due to the influence of the glass component coating the surface.

### [Boron Nitride Particles]

As a raw material of the glass-coated aluminum nitride particles of the present invention, in addition to the aluminum nitride particles and the composition powder comprising the glass component, it is possible to use boron nitride particles having a cumulative volume d50 of 0.5 to 30 µm. The objective thereof involves the later described production method of the glass-coated aluminum nitride particles. Namely, the glass-coated aluminum nitride particles of the present invention are obtained by melt coating the composition comprising the glass component onto the surface of the aluminum nitride particles, and after this, crushing particles which mutually melt-adhere to each other when melt coating. Therefore, in the case that the glass coating is thick, or in particular in the case that much of the glass component has accumulated at a portion where the particles have mutually adhered to each other, in a process where the particles become mutually loosened from each other when crushing, separation arises at the interface between the aluminum nitride particles and the glass coating layer, and there is the possibility that the surface of the aluminum nitride particle becomes exposed. Because the exposure of the aluminum nitride particles will involve a reduction in the moisture resistance due to hydrolysis, it is required to suppress to a minimum defects in the glass coating. Thus, by adding boron nitride particles, which have a low Mohs hardness and readily fracture along a cleavage plane, when crushing, the glass coating readily fractures with the boron nitride particles as a starting point, and the individual glass-coated aluminum nitride particles are readily crushed without separation of the glass coating. The added amount of the boron nitride particles is preferably in the range of 0.1 to 10.0 parts by weight with respect to 100.0 parts by weight of the aluminum nitride particles, more preferably 0.5 to 7.0 parts by weight, and even more preferably 1.0 to 5.0 parts by weight. The reason for this is that with 0.1 parts by weight or more, it effectively operates as a starting point of mutually fracturing among the coated particles when crushing, and by making it 10.0 parts by weight or less, it is possible to suppress a reduction in the thermal conductivity of the coated particles due to the effect of the coating layer.

The boron nitride particles are not particularly limited, but hexagonal crystalline boron nitride particles are preferable, and as the particle shape, a scale-like shape or granular shape may be appropriately used, but a scale-like shape is preferable. The cumulative volume d50 of the boron nitride particles is preferably in the range of 0.3 to 30 µm, more preferably 0.5 to 15 µm, and even more preferably 1 to 5 µm. The reason for this is that with 0.3 µm or more, the effect as a starting point of fracturing when crushing as described above is exhibited, and with 30 µm or less it is possible to prevent the glass coating layer from falling off.

### [Method of Producing Glass-Coated Aluminum Nitride Particles]

The method of producing the glass-coated aluminum nitride particles of the present invention is a method of forming a glass coating film on the surface of the aluminum nitride particle by mixing, while applying a shearing stress by a mechano-chemical method, to aluminum nitride particles and a composition powder comprising a glass component, and after this, melting the composition comprising the glass component by a heat treatment.

The method for producing the glass coated aluminum nitride particles of the present invention is shown by the flowchart of Fig. 1. Below, a detailed explanation will be given with reference to Fig. 1.

The first step of the present invention is a step of mixing, while applying a shearing stress by a mechano-chemical method, aluminum nitride particles and a composition powder comprising a glass component as raw materials. The mechano-chemical method is a treatment method of solid surfaces among the solids themselves, and is a surface treatment method which utilizes a surface activity by crushing, friction or impacting or the like, and differs from simple powder mixing. The present invention in particular, is the subject of a mixing method wherein a shearing stress is applied the raw materials. In the case of mixing with a general powder mixing apparatus, for example a rotary vessel type V blender, a double cone type blender or the like, or a ribbon blender having a mixing blade, a screw type blender or the like, even if it is possible to uniformly mix the aluminum nitride particles and the composition powder comprising the glass component, it is not possible to firmly adhere the composition powder comprising the glass component to the surface of the aluminum nitride particle. In contrast, the first step of the present invention is a mixing step applying a shearing energy by a mechano-chemical method, and it is possible to uniformly and firmly adhere the particles of the composition comprising the glass component to the surface of the aluminum nitride particle, and it becomes possible to eventually produce uniform glass-coated aluminum nitride particles.

The apparatus for mixing while applying a shearing stress by the mechano-chemical method is not particularly limited, provided that is it one which can mix while a force such as impact, compression or friction mutually operates among the particles inside the apparatus. It is possible to use a commercial apparatus for surface modification and/or compounding of the surface of particles in a dry form by the particles. For example, a dry particle compounding apparatus "Nobilta (R) NOB Series" (produced by Hosokawa Micron Corporation), a particle design device "COMPOSI" (produced by Japan Coke Engineering Co.), and a hybridization system "NHS Series" (produced by Nara Machinery Co., Ltd.) may be mentioned.

In the first step (mixing step), as a raw material, in addition to the aluminum nitride particles and the composition powder comprising the glass component, it is possible to use boron nitrate particles with a cumulative volume d50 of 0.3 to 30 µm. In the case of adding the boron nitride particles, it may be carried out by a mixing operation wherein it is added at the same time as the aluminum nitride particles and the composition powder comprising the glass component, in the mixing step by a mechano-chemical method. In this case also, the effect of adding the boron nitride particles can be sufficiently obtained. Namely, as described above, by adding the boron nitride particles, the coating separation of the glass-coated aluminum nitride particles becomes small, and as an effect of this the moisture resistance is improved. As a more preferable mixing method, a two-stage mixing method may be mentioned, wherein firstly the aluminum nitride particles and the composition powder comprising the glass component are mixed for a set time, and after this, the boron nitride particles are added, and all of the raw materials are further mixed for a set time. By the two-stage mixing, it is possible to prevent excessively fine crushing of the boron nitride particles, which have a low hardness.

In the first step (mixing step), other than the aluminum nitride particles and the composition powder comprising the glass component as the raw materials, it is possible to use a binder such as paraffins. The role of the binder is to stably adhere the composition powder comprising the glass component to the surface of the aluminum nitride particle in the mixing step, and one which does not leave a trace on the surface of the glass-coated aluminum nitride particle by the firing of the later described heat treatment step, is preferable. The binder is not particularly limited, and for example, paraffins may be mentioned. As the paraffins, a fluid paraffin or a solid paraffin, with a weight-average molecular weight of 200 to 600 may be used individually or two or more types may be used in combination.

The second step of the present invention is a step of carrying out a heat treatment of the mixture of the aluminum nitride particles and the composition powder comprising the glass component, and provided that the mixture of the aluminum nitride particles and the composition powder comprising the glass component can be held at a predetermined temperature range, a common heating furnace may be used. As the heat treatment temperature, it must be carried out at the glass transition temperature of the composition powder comprising the glass component or more, and at 2000°C or less, which does not exceed the melting point of aluminum nitride. As a result of diligent study of the results of the heat treatment temperature and the moisture resistance of the coated particles, it was discovered that there is an intimate relationship between the heat treatment temperature and the moisture resistance. Namely, a favorable moisture resistance is obtained when the heat treatment temperature is carried out in a range of 400 to 1400°C, more preferably 550 to 1250°C, and even more preferably 700 to 1100°C. At this time the treatment time is preferably in a range of 30 minutes to 3 hours, more preferably 45 minutes to 3 hours, and even more preferably in a range of 1 to 2 hours. If the heat treatment temperature is in a range of 400 to 1000°C, a uniform coating film of the glass component on the aluminum nitride particles can be obtained. If the treatment time is 30 minutes or more, a uniform coating film of the glass component on the surface of the aluminum nitride particle can be obtained, and if 3 hours or less, the glass-coated aluminum nitride particles of the present invention can be produced with good production efficiency. Further, the glass transition temperature of the composition powder comprising the glass component used in the present invention is preferably in the range of 300 to 900°C, more preferably 500 to 800°C, and even more preferably 600 to 700°C. The reason for this is that if the glass transition temperature is in the range of 300 to 900°C, a precise coating film of the glass component on the aluminum nitride particles can be obtained.

Further, because the value of the glass transition temperature differs depending on the measuring method and conditions, in the present invention the first inflection point of the DTA chart using Differential Thermal Analysis (DTA) is defined as the glass transition temperature. Specifically, it can be measured using a differential thermal balance (Thermoplus EVO2: produced by Rigaku Corp.).

The atmosphere involved in the heat treatment of the second step is not particularly limited, and it may be carried out in air, but it is preferably carried out in an atmosphere which does not include oxygen gas such as in an inert gas or in a vacuum. The reason for this is that by preventing oxidation of the aluminum nitride, conversion to alumina, which has poor thermal conductivity, can be prevented. In consideration of economic efficiency, the heat treatment is preferably under a nitrogen gas atmosphere.

The third step of the present invention is a step for obtaining the glass-coated aluminum nitride particles wherein, by cooling and solidifying after having coated the aluminum nitride particle surface by melting the composition powder comprising the glass component by the heat treatment of the second step, these are crushed because the coated particles will partially mutually adhere to each other. The apparatus used in the crushing step is not particularly limited, and a general crusher such as a roller mill, hammer mill, jet mill or ball mill may be used.

The glass-coated aluminum nitride particles obtained in this way maintain their inherent thermal conductivity, are excellent in moisture resistance, and may be widely used as a filler for heat-dissipating material applications such as the electric/electronics field.

### [Heat-Dissipating Resin Composition Comprising the Glass-Coated Aluminum Nitride Particles]

The glass-coated aluminum nitride particles obtained by the production method of the present invention can be added into a resin to make a heat-dissipating resin composition. Further, generally used fillers such as boron nitride, alumina, silica, zinc oxide, may be used in combination besides the glass-coated aluminum nitride particles.

In the heat-dissipating resin composition, the total content of the filler comprising the glass-coated aluminum nitride particles is preferably in the range of 50 to 95 vol%, more preferably 60 to 90 vol%, and even more preferably 70 to 90 vol%. If the total content of the filler is 50 vol% or more, a favorable heat dissipation is exhibited, and if 95 vol% or less a favorable workability when using the heat-dissipating resin composition can be obtained.

The content of the glass-coated aluminum nitride particles is preferably in the range of 30 to 100 vol% of the total content of the filler, more preferably 40 to 100 vol%, and even more preferably 50 to 100 vol%. With 30 vol% or more of the total content of the filler, a favorable heat dissipation can be exhibited.

The resin used for the heat-dissipating resin composition is not particularly limited, but from the point of excellent heat resistance, a thermosetting resin, thermoplastic resin, or a mixture of a thermosetting resin and a thermoplastic resin is preferable. As a thermosetting resin, for example, an epoxy resin, phenol resin, bismaleimide resin, cyanate resin, urethane resin, silicone resin, (meth)acrylic resin, vinyl ester resin, unsaturated polyester resin may be mentioned, and these may be used individually or two or more may be mixed. Further, these thermosetting resins may be used as a mixture with a curing agent or curing accelerant therefor added thereto. Among these, in the point of good heat resistance, adhesiveness, and electrical characteristics after curing, an epoxy resin is preferable, and in applications where heat resistance and flexible adhesion are important, a silicone resin is preferable.

As an epoxy resin, a bifunctional glycidyl ether type epoxy resin such as a bisphenol A type epoxy resin, a bisphenol F type epoxy resin, a bisphenol S type epoxy resin, a hydrogenated bisphenol A type epoxy resin, a biphenyl type epoxy resin, a glycidyl ester type epoxy resin such as glycidyl ester hexahydrophthalate, a dimeric acid glycidyl ester, a linear aliphatic epoxy resin such as epoxidized polybutadiene, and epoxidized soybean oil, a heterocyclic type epoxy resin such as triglycidylisocyanurate, a glycidyl amine type expoxy resin such as N,N,N'N'-tetraglycidyl-4,4'-diaminodiphenylmethane, N,N,N',N'-tetraglycidyl-1,3-benzenedi(methaneamine), 4-(glycidyloxy)-N,N-diglycidylaniline, 3-(glycidyloxy)-N,N-diglycidylaniline, a multifunctional glycidyl ether type epoxy resin such as phenolnovolac type epoxy resins, cresolnovolac type epoxy resins, biphenylaralkyl type epoxy resins, naphthalenearalkyl type epoxy resins, tetrafunctional naphthalene type epoxy resins and triphenylmethane type epoxy resins may be mentioned. The above epoxy resins may be used individually or two or more may be mixed.

In the case of using the above epoxy resins, a curing agent or curing accelerant may also be blended. As a curing agent, for example, an alicyclic acid anhydride such as methyltetrahydrophthalic anhydride, methylhexahydrophthalic anhydride, and methylhimic anhydride, an aliphatic acid anyhydride such as dodecenyl succinic anhydride, an aromatic anhydride such as phthalic anhydride, and trimellitic anhydride, bisphenols such as bisphenol A, bisphenol F, bisphenol S, phenol resins such as phenol-formaldehyde resin, phenol-aralkyl resin, naphthol-aralkyl resin, phenol-dicyclopentadiene copolymer resin, an organic dihydrazide such as dicyandiamide and adipic dihydrazide may be mentioned, and as a curing catalyst, for example, amines such as tris(dimethylaminomethyl)phenol, dimethylbenzylamine, 1,8-diazabicyclo(5,4,0)undecene and their derivatives, and imidazoles such as 2-methylimidazole, 2-ethyl-4-methylimidazole, and 2-phenylimidazole may be mentioned. These may be used individually, or in combinations of 2 or more.

To the heat-dissipating resin composition, a flexibility imparting agent such as silicone, urethane acrylate, butyral resin, acryl rubber, diene rubber and their copolymers, silane-based coupling agents, titanium-based coupling agents, inorganic ion supplementing agents, pigments, dyes, diluents, solvents, may be suitably added as necessary.

The method of producing the heat-dissipating resin composition is not particularly limited, but a method wherein the glass-coated aluminum nitride particles, resin, other additives are mixed, melted and kneaded, consolidated or divided, in a dispersion/dissolution apparatus alone or in combination as appropriate, such as a mortar vessel, planetary mixer, rotating and revolving mixer, kneader, roll mill or the like, may be mentioned.

The heat-dissipating resin composition can be made into a heat-dissipating sheet. The heat-dissipating resin composition and the heat-dissipating sheet can be suitably used for adhesive applications such as semiconductor power devices or power modules.

As the production method of the heat-dissipating sheet, a method of forming by a compression press with the heat-dissipating resin composition in a form where both faces are sandwiched by a base film, or a method wherein the heat-dissipating resin composition is coated onto a base film using an apparatus such as a bar coater, screen printing, blade coater, die coater or comma coater, may be mentioned. The heat-dissipating sheet after forming or coating may have an additional treatment step such as a step of removing a solvent, converting to B stage by heating or fully curing. By such steps, it is possible to obtain a heat-dissipating sheet in various forms, and it becomes possible to widely applicable to a broad range of target fields of application and methods of use.

When coating or forming the heat-dissipating resin composition on a base film, a solvent can be used to make the workability good. The solvent is not particularly limited, and it is possible to use a ketone-based solvent such as acetone, metylethyl ketone, methylisobutyl ketone, cyclopentanone, cyclohexanone, an ether-based solvent such as 1,4-dioxane, tetrahydrofuran, diglyme, a glycol ether based solvent such as methyl cellosolve, ethyl cellosolve, propyleneglycol monomethyl ether, propyleneglycol monoethyl ether, proyleneglycol monobutyl ether, propyleneglycol monomethyl ether acetate, propyleneglycolmonoethyl ether acetate, diethyleneglycol methylethyl ether, other benzyl alcohols, N-methylpyrrolidone, γ-butyrolactone, ethyl acetate, N,N-diemethylformamide, may be used individually or in combinations of two or more.

To form the heat-dissipating resin composition into a sheet shape, it is necessary to have a sheet formability which can maintain the sheet form. In order to obtain sheet formability, a high molecular weight component is preferably added to the heat-dissipating resin composition. For example, a phenoxy resin, polyimide resin, polyamide resin, polycarbodimide resin, cyanate ester resin, (meth)acryl resin, polyester resin, polyethylene resin, polyether sulfone resin, polyether imide resin, polyvinyl acetal resin, urethane resin, acryl rubber may be mentioned, and among these, from the viewpoint of excellent heat resistance and film formability, a phenoxy resin, polyimide resin, (meth)acryl resin, acryl rubber, cyanate ester resin, polycarbo dimide resin are preferable, and a phenoxy resin, polyimide resin, (meth)acryl resin, and acryl rubber are more preferable. These may be used individually or in mixtures of two or more, or as copolymers.

As the molecular weight of the high molecular weight component, a weight average molecular weight in the range of 10,000 to 100,000 is preferable, and 20,000 to 50,000 is more preferable. By adding a weight average molecular weight component in this range, is it possible to maintain a favorable sheet form with good handling characteristics. The weight average molecular weight is a polystyrene-converted weight average molecular weight using gel permeation chromatography (GPC), and specifically, can be measured by a combination of a column (Shodex (registered trademark) LF-804: produced by Showa Denko K.K.) and a differential refractometer (Shodex (registered trademark) RI-71S: produced by Showa Denko K.K.). The added amount of the high molecular weight component is not particularly limited, but in order to maintain good sheet formability, is preferably in a range of 0.1 to 20 weight% with respect to the heat-dissipating resin composition, more preferably 1 to 15 weight%, and even more preferably 2 to 10 weight%. With an added amount of 0.1 to 20 weight% the handling characteristics are good, and a favorable sheet formability and coat formability can be obtained.

The base film used when producing the heat-dissipating sheet is not particularly limited provided that it can tolerate the processing conditions of heating and drying during production, and for example, films consisting of a polyester having an aromatic ring such as polyethylene terephthalate (PET) or polybutylene terephthalate (PBT), polypropylene film, polyimide film and polyether imide film may be mentioned. These films may be a multilayer film where two or more are used in combination, and the surface may be one which is release agent treated such as a silicone-based one. The thickness of the base film is preferably 10 to 100 µm.

The thickness of the heat-dissipating sheet formed on the base film is preferably 20 to 500 µm, and more preferably 50 to 200 µm. With a thickness of the heat-dissipating sheet of 20 µm or more a uniform composition of the heat-dissipating sheet can be obtained, and with 500 µm or less a favorable heat dissipation property can be obtained.

### EXAMPLES

The present invention is explained with reference to the below examples and comparative examples, but the present invention is not in any way limited by these examples.

### [Preparation of the Glass-Coated Aluminum Nitride Particles]

Aluminum nitride particles in sintered granule form with a cumulative volume d50 of 78 µm (A1N800RF: produced by ThruTek Co.), a glass frit (TMX-403SC: produced by Tokan Material Technology Co., Ltd.), constituted with a component ratio of 10 to 20 weight% Al₂O₃, 10 to 20 weight% CaO, 10 to 20 weight% B₂O₃, 40 to 50 weight% SiO₂, and 1 to 10 weight% BaO, with a cumulative volume d50 of 2.4 µm, and a glass transition temperature of 674°C as the composition powder comprising a glass component, and hexagonal crystalline boron nitride particles with a cumulative volume d50 of 10.4 µm (SHOBN (registered trademark) UHP-2: produced by Showa Denko K.K.) were used as raw materials. The blended amounts of the Examples and Comparative Examples are shown in Table 1 and Table 2. For Examples 1 to 6, Comparative Example 5 and Comparative Example 6, the mixing of the first step shown in Fig. 1 was carried out using a particle compounding apparatus Nobilta MINI (produced by Hosokawa Micron Corp.) which is capable of mixing while applying a shearing stress by a mechano-chemical method. The operating conditions of the particle compounding apparatus were that the aluminum nitride particles and the composition powder comprising the glass component were charged into the apparatus according to the blending ratio, and mixing was carried out under conditions of a rotation rate of 3500 rpm, and 1 minute. For Example 5, Example 6 and Comparative Example 6, after the mixing of the aluminum nitride particles and the composition powder comprising the glass component, the boron nitride particles were charged into the apparatus according to the blending ratio, and mixing was carried out under conditions of a rotation rate of 3500 rpm, and 2 minutes. Further, for Comparative Example 1 and Comparative Example 2, mixed by carried out by manually shaking for 3 minutes a polyethylene bag into which all of the blended components were introduced. Further, for Comparative Example 3 and Comparative Example 4, mixing was carried out using a powder mixing apparatus Tumbler Mini MC-02/05 (produced by Eishin K.K.) which does not apply a shearing stress by the mechano-chemical method. As the operating conditions of the powder mixing apparatus, the aluminum nitride particles and the composition powder comprising the glass component were charged into the mixing apparatus according to the blending ratio, and mixed under conditions of a rotation rate of 45 rpm, and 3 minutes. For Comparative Example 4, after the mixing of the aluminum nitride particles and the composition powder comprising the glass component, the boron nitride particles were charged into the apparatus according to the blending ratio, and mixing was carried out under conditions of a rotation rate of 45 rpm, and 3 minutes. After this, the mixtures of each of the Examples and Comparative Examples after completion of the first step were each charged into a crucible, and using a high temperature furnace in a nitrogen gas atmosphere, the heat treatment of the second step was carried out as shown in Fig. 1 under conditions of 950°C, and 1 hour. Further, the heat treatment of the second step was not carried out for Comparative Example 5 and Comparative Example 6. Next, for the Examples and Comparative Examples after the completion of the heat treatment, the crushing of the third step was carried out as shown in Fig. 1 using a mortar, and the glass-coated aluminum nitride particles of the Examples and Comparative Examples were obtained. Further, Comparative Example 7 is the aluminum nitride particles in the form of sintered particles used as the raw materials of the Examples and Comparative Examples, and is an unprocessed product which has not gone through any of the steps.

**[Table 1]**

| Item | | | Example 1 | Example 2 | Example 3 | Example 4 | Example 5 | Example 6 |
|---|---|---|---|---|---|---|---|---|
| Glass-coated aluminum nitride particles | Composition (Parts by weight) | Aluminum nitride particles | 100.0 | 100.0 | 100.0 | 100.0 | 100.0 | 100.0 |
| | | Composition powder comprising glass component | 0.1 | 0.5 | 1.0 | 5.0 | 1.0 | 1.0 |
| | | Boron nitride particles | 0.0 | 0.0 | 0.0 | 0.0 | 1.0 | 2.0 |
| | Mixing | Method | Mechano-chemical | | | | | |
| | | | Apparatus 1^{*4} | Apparatus 1^{*4} | Apparatus 1^{*4} | Apparatus 1^{*4} | Apparatus 1^{*4} | Apparatus 1^{*4} |
| | | Rotation rate (rpm) | 3,500 | 3,500 | 3,500 | 3,500 | 3,500 | 3,500 |
| | | Time-1 (min) ^{*1} | 1 | 1 | 1 | 1 | 1 | 1 |
| | | Time-2 (min) ^{*1} | - | - | - | - | 2 | 2 |
| | Heat Treatment | Heat treatment temperature (°C) | 950 | 950 | 950 | 950 | 950 | 950 |
| | | Heat treatment time (h) | 1 | 1 | 1 | 1 | 1 | 1 |
| | Moisture resistance | Ammonia concentration (mg/L) | 10 | 8 | 6 | 5 | 4 | 4 |
| Resin formed body | Composition (Parts by weight) | Glass-coated aluminum nitride particles | 100.0 | 100.0 | 100.0 | 100.0 | 100.0 | 100.0 |
| | | Alumina filler | 50.0 | 50.0 | 50.0 | 50.0 | 50.0 | 50.0 |
| | | Epoxy resin | 11.1 | 11.1 | 11.1 | 11.1 | 11.1 | 11.1 |
| | | High molecular weight component | 1.2 | 1.2 | 1.2 | 1.2 | 1.2 | 1.2 |
| | | Curing agent | 0.1 | 0.1 | 0.1 | 0.1 | 0.1 | 0.1 |
| | Filler (vol.%) | Total filler amount^{*3} | 80.5 | 80.5 | 80.5 | 80.5 | 80.5 | 80.5 |
| | Characteristics | Thermal conductivity (W/m/K) | 13.8 | 13.6 | 13.4 | 11.4 | 12.4 | 11.8 |

| | | | | | | | | |
|---|---|---|---|---|---|---|---|---|
| *1: Mixing time of the aluminum nitride particles and the composition powder comprising the glass component *2: Remixing time after adding the boron nitride particles *3: Total amount of the glass-coated aluminum nitride particles and alumina filler *4: Particle compounding apparatus Nobilta MINI (produced by Hosokawa Micron Corp.) | | | | | | | | |

**[Table 2]**

| Item | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Glass-coated aluminum nitride particles | Composition (Parts by weight) | Aluminum nitride particles | 100.0 | 100.0 | 100.0 | 100.0 | 100.0 | 100.0 | 100.0 |
| | | Composition powder comprising class component | 1.0 | 1.0 | 1.0 | 1.0 | 1.0 | 1.0 | |
| | | Boron nitride particles | 0.0 | 1.0 | 0.0 | 1.0 | 0.0 | 1.0 | |
| | Mixing | Method | Non-mechano-chemical | | | | Mechano-chemical | | |
| | | | Hand mixing | Hand mixing | Apparatus 2^{*5} | Apparatus 2^{*5} | Apparatus 1^{*4} | Apparatus 1 ^{*4} | |
| | | Rotation rate (rpm) | / | / | 45 | 45 | 3,500 | 3,500 | |
| | | Time-1 (min) *1 | 3 Consolidated feed | 3 Consolidated feed | 3 | 3 | 1 | 1 | |
| | | Time-2 (min) *1 | | | - | 3 | - | 2 | |
| | Heat Treatment | Heat treatment temperature (°C) | 950 | 950 | 950 | 950 | | | |
| | | Heat treatment time (h) | 1 | 1 | 1 | 1 | | | |
| | Moisture resistance | Ammonia concentration (mg/L) | 50 | 31 | 35 | 24 | 354 | 532 | 357 |
| Resin formed body | Composition (Parts by weight) | Glass-coated aluminum nitride particles | 100.0 | 100.0 | 100.0 | 100.0 | 100.0 | 100.0 | 100.0 |
| | | Alumina filler | 50.0 | 50.0 | 50.0 | 50.0 | 50.0 | 50.0 | 50.0 |
| | | Epoxy resin | 11.1 | 11.1 | 11.1 | 11.1 | 11.1 | 11.1 | 11.1 |
| | | High molecular weight component | 1.2 | 1.2 | 1.2 | 1.2 | 1.2 | 1.2 | 1.2 |
| | | Curing agent | 0.1 | 0.1 | 0.1 | 0.1 | 0.1 | 0.1 | 0.1 |
| | Filler (vol.%) | Total filler amount^{*3} | 80.5 | 80.5 | 80.5 | 80.5 | 80.5 | 80.5 | 80.5 |
| | Characteristics | Thermal conductivity (W/m/K) | 13.5 | 12.3 | 13.5 | 12.4 | 13.7 | 12.6 | 14.0 |

| | | | | | | | | | |
|---|---|---|---|---|---|---|---|---|---|
| *1: Mixing time of the aluminum nitride particles and the composition powder comprising the glass component *2: Remixing time after adding the boron nitride particles *3: Total amount of the glass-coated aluminum nitride particles and alumina filler *4: Particle compounding apparatus Nobilta MINI (produced by Hosokawa Micron Corp.) *5: powder mixing apparatus Tumbler Mini MC-02/05 (produced by Eishin K.K.) | | | | | | | | | |

### [Moisture Resistance of the Glass-Coated Aluminum Nitride Particles]

For the moisture resistance evaluation of the glass-coated aluminum nitride particles, 17 g of an aqueous hydrochloric acid solution adjusted to pH 4, and 3 g of the glass-coated aluminum nitride particles were introduced into a 50 ml sample tube, and after sealing, under conditions of shaking in a shaking type high temperature tank at 40°C and 80 rpm for 2 hours, the ammonia concentration of the supernatant liquid after standing was measured using an ammonia electrode (Ammonia Electrode 5002A: produced by Horiba, Ltd.). The evaluation results of the characteristics of the glass-coated aluminum nitride particles of the Examples and Comparative Examples are shown in Table 1 and Table 2.

### [Production of the Resin Formed Body]

The glass-coated aluminum nitride particles of Examples 1 to 6 and Comparative Examples 2 to 9 and the aluminum nitride particles of Comparative Example 1, a spherical alumina filler with a cumulative volume d50 of 5 pm (Alunabeads (registered trademark) CB-P05: produced by Showa Denko K.K.), and as a resin component, a bispheonl A type epoxy resin with an epoxy equivalent weight of 189 (YD128: produced by Nippon Steel and Sumikin Chemical CO.,LTD.), and as a high molecular weight component, a bisphenol A type phenoxy resin with a polystyrene converted weight average molecular weight of 40,000 (YD-50S: produced by Nippon Steel and Sumikin Chemical CO.,LTD.), were dissolved at 30 weight% in 1-methoxy-2-propanol (solvent), and as a curing agent, 2-ethyl-4-methylimidazole (2E4MZ: produced by Shikoku Chemicals Corporation) were blended in the weight parts disclosed in Table 1 and Table 2, and a resin formed body was obtained by the below procedure. First, the resin component, the high molecular weight component and the curing agent were blended in a plastic container in the weight ratios disclosed in Table 1 and Table 2, and a mixture was prepared using a rotating and revolving mixer under conditions of 2,000 rpm, and 2 minutes. Next, the glass-coated aluminum nitride particles of the Examples and Comparative Examples (however, aluminum nitride in Comparative Example 1), and the alumina filler were added to the plastic vessel in the weight ratios disclosed in Table 1 and Table 2, and mixed using a rotating and revolving mixer under conditions of 2,000 rpm and 3 minutes. The mixture was introduced to a stainless-steel vat, dried for 15 minutes at 50°C using a vacuum drying vessel, the solvent was volatilized, and a heat-dissipating resin composition was obtained.

The formation of the resin formed body of the Examples and Comparative Examples was carried out using a heating press apparatus. A mold made of polyethylene terephthalate (below, referred to as PET) with holes having a diameter of 30 mm and a thickness of 0.4 mm was placed on a stainless-steel plate with a mold release treated PET film disposed on a surface, the heat-dissipating resin composition was disposed inside the mold, was sandwiched between a PET film whose upper surface was mold release treated and the stainless-steel plate, and molding and curing were carried out by a hot press machine under conditions of 5 MPa, 120°C, 30 minutes, to obtain the resin formed body.

### [Measurement of Thermal Conductivity]

The thermal diffusion coefficient was measured with a laser flash method thermal diffusion rate measuring apparatus (LFA447 Nano Flash: produced by Netzsch GmbH) for each of the resin formed bodies obtained in the Examples and Comparative Examples, the value calculated by multiplying the theoretical values of the heat capacity and the concentration of each resin formed body, was taken as the thermal conductivity in the thickness direction of the resin formed body. The samples that were used for the thermal diffusion coeffeicnt measurement were cut to a size of 10 mm × 10 mm, and after applying a gold coating to both sides using an ion coater (IB-3: produced by Eiko Co., Ltd.), both faces were further coated with graphite. Further, the heat capacity of the resin formed body of each of the Examples and Comparative Examples was calculated with the theoretical heat capacity of the aluminum nitride as 0.73, the theoretical heat capacity of the boron nitride as 0.80, the theoretical heat capacity of the alumina filler as 0.83, and the theoretical heat capacity of the resin component as 1.80. Further, the density of the resin formed body of each of the Examples and Comparative Examples was calculated with the theoretical density of the aluminum nitride as 3.26 g/cm3, the theoretical density of the boron nitride as 2.27 g/cm3, the theoretical density of the alumina filler as 3.94 g/cm³, and the theoretical density of the resin component as 1.17 g/cm³. The thermal conductivity evaluation results of the resin formed bodies of the Examples and Comparative Examples are shown in Table 1 and Table 2.

The results for the moisture resistance of the glass-coated aluminum nitride particles obtained by the production method of the present invention are shown in Table 1, Table 2 and Fig. 2. The moisture resistance of the glass-coated aluminum nitride particles of Examples 1 to 6, which were prepared using an apparatus capable of mixing while applying a shearing force by the mechano-chemical method all had favorable values of the ammonia concentration of 10 mg/L or less, in contrast to the value of the ammonia concentration of 357 mg/L of the aluminum nitride particles of Comparative Example 7 which did not have a coating. Among these, Example 5 and Example 6 which included boron nitride particles had particularly favorable moisture resistance. On the other hand, Comparative Example 1 and Comparative Example 2 respectively had the same raw material constitution of the glass-coated aluminum nitride particles of Example 3 and Example 5, but in the mixing step, an apparatus capable of mixing while applying a shearing force by the mechano-chemical method was not used, and mixing was carried out by hand mixing, and the ammonia concentration was at a level of one order of magnitude worse. Comparative Example 3 and Comparative Example 4 respectively had the same raw material constitution of the glass-coated aluminum nitride particles of Example 3 and Example 5, but in the mixing step, mixing was carried out by a powder mixing apparatus which does not apply a shearing force by the mechano-chemical method, and the ammonia concentration was at a level of one order of magnitude worse compared to the Examples. Further, Comparative Example 5 and Comparative Example 6 respectively had the same raw material constitution of the glass-coated aluminum nitride particles of Example 3 and Example 5, and were prepared under the same conditions by the apparatus capable of mixing while applying a shearing force by the mechano-chemical method, but without going through the heat treatment step, and the values were widely inferior. The value of Comparative Example 5 was about the same value as the aluminum nitride particles of Comparative Example 7 which did not have a glass coating treatment, and it can be understood that melt coating of the glass component by a heat treatment step is essential in order to increase the moisture resistance. Further, Comparative Example 6 was inferior to Comparative Example 7, and it is thought that this is because the boron nitride particles which have low strength were finely crushed by the shearing force of the apparatus and the surface area increased, and under the moisture test conditions, the boron nitride itself was readily hydrolyzed. From the above results, it is understood that the glass-coated aluminum nitride particles obtained by the production method of the present invention can in each stage increase the moisture resistance of the aluminum nitride particles.

Regarding the thermal conductivity, evaluations were carried out for resin formed bodies comprising the glass-coated aluminum nitride particles, and the results are shown in Table 1, Table 2 and Fig. 3. All of the Examples which use the glass-coated aluminum nitride particles of the present invention showed high thermal conductivity exceeding 10W/m/K, and showed a favorable thermal conductivity of 81 to 98% of Comparative Example 7 which used aluminum nitride particles without a glass coating.

## Claims

1. A method of producing glass-coated aluminum nitride particles **characterized in** comprising a first step of mixing, while applying a shearing force by a mechano-chemical method, a mixture of aluminum nitride particles with a cumulative volume d50 of 10 to 200 µm, and a composition powder with a cumulative volume d50 of 0.3 to 50 µm comprising a glass component,
a second step of heat treating the mixture after the first step, at a temperature of the glass transition temperature of the glass component or more, and 2000°C or less, and
a third step of crushing the heat treated product after the second step.

2. A method of producing glass-coated aluminum nitride particles according to claim 1, wherein, in the first step, the composition powder comprising the glass component has a ratio of 0.1 to 5.0 parts by weight with respect to 100.0 parts by weight of the aluminum nitride particles.

3. A method of producing glass-coated aluminum nitride particles according to claim 1 or 2, wherein, in the first step, in addition to the aluminum nitride particles and the composition powder comprising the glass component, boron nitride particles with a cumulative volume d50 of 0.3 to 30 µm are added and mixed.

4. A method of producing glass-coated aluminum nitride particles according to claim 3, wherein, in the first step, the boron nitride particles have a ratio of 0.1 to 10.0 parts by weight with respect to 100.0 parts by weight of the aluminum nitride particles.

5. A method of producing glass-coated aluminum nitride particles according to any one of claims 1 to 4, wherein the second step is carried out under an atmosphere which does not include oxygen gas.

6. A method of producing glass-coated aluminum nitride particles according to any one of claims 1 to 5, wherein the heat treatment of the second step is in a range of 400 to 1000°C for 30 minutes to 3 hours.

7. A method of producing a heat-dissipating resin composition, **characterized in** mixing the glass-coated aluminum nitride particles obtained by the production method of any one of claims 1 to 6 and a resin.

## Patentansprüche

1. Verfahren zur Herstellung glasbeschichteter Aluminiumnitridteilchen, **dadurch gekennzeichnet, dass** es einen ersten Schritt aufweist, bei dem unter Anwendung einer Scherkraft mittels eines mechanisch-chemischen Verfahrens ein Gemisch aus Aluminiumnitridteilchen mit einem kumulativen Volumen d50 von 10 bis 200 µm und einem Zusammensetzungspulver mit einem kumulativen Volumen d50 von 0,3 bis 50 µm, welches eine Glaskomponente umfasst, vermengt wird,
einen zweiten Schritt der Wärmebehandlung des Gemischs nach dem ersten Schritt bei einer Temperatur von der Glasübergangstemperatur der Glaskomponente oder mehr und 2000°C oder weniger, und
einen dritten Schritt der Zerkleinerung des wärmebehandelten Produkts nach dem zweiten Schritt.

2. Verfahren zur Herstellung glasbeschichteter Aluminiumnitridteilchen nach Anspruch 1, wobei in dem ersten Schritt das die Glaskomponente umfassende Zusammensetzungspulver ein Verhältnis von 0,1 bis 5,0 Gewichtsteilen in Bezug auf 100,0 Gewichtsteile der Aluminiumnitridteilchen hat.

3. Verfahren zur Herstellung glasbeschichteter Aluminiumnitridteilchen nach Anspruch 1 oder 2, wobei in dem ersten Schritt zusätzlich zu den Aluminiumnitridteilchen und dem die Glaskomponente enthaltenden Zusammensetzungspulver auch Bornitridteilchen mit einem kumulativen Volumen d50 von 0,3 bis 30 µm zugegeben und zugemischt bzw. vermengt werden.

4. Verfahren zur Herstellung glasbeschichteter Aluminiumnitridteilchen nach Anspruch 3, wobei in dem ersten Schritt die Bornitridteilchen ein Verhältnis von 0,1 bis 10,0 Gewichtsteilen, bezogen auf 100,0 Gewichtsteile der Aluminiumnitridteilchen, haben.

5. Verfahren zur Herstellung glasbeschichteter Aluminiumnitridteilchen nach einem der Ansprüche 1 bis 4, wobei der zweite Schritt unter einer Atmosphäre durchgeführt wird, die kein Sauerstoffgas enthält.

6. Verfahren zur Herstellung glasbeschichteter Aluminiumnitridteilchen nach einem der Ansprüche 1 bis 5, wobei die Wärmebehandlung des zweiten Schritts in einem Bereich von 400 bis 1000°C für 30 Minuten bis 3 Stunden erfolgt.

7. Verfahren zur Herstellung einer wärmeableitenden Harzzusammensetzung, **dadurch gekennzeichnet, dass** die durch das Herstellungsverfahren nach einem der Ansprüche 1 bis 6 erhaltenen glasbeschichteten Aluminiumnitridteilchen und ein Harz gemischt werden.

## Revendications

1. Procédé de production de particules de nitrure d'aluminium sous revêtement de verre **caractérisé en ce qu'**il comprend une première étape de mélange, tout en appliquant une force de cisaillement par un procédé mécanochimique, d'un mélange de particules de nitrure d'aluminium présentant un volume cumulé d50 de 10 à 200 *µ*m, et d'une composition en poudre présentant un volume cumulé d50 de 0,3 à 50 *µ*m comprenant un composant de verre,
une deuxième étape de traitement thermique du mélange après la première étape, à une température de la température de transition vitreuse du composant de verre ou plus, et de 2 000 °C ou moins, et
une troisième étape de broyage du produit traité thermiquement après la deuxième étape.

2. Procédé de production de particules de nitrure d'aluminium sous revêtement de verre selon la revendication 1, dans lequel, dans la première étape, la composition en poudre comprenant le composant de verre a un rapport de 0,1 à 5,0 parties en poids par rapport à 100,0 parties en poids des particules de nitrure d'aluminium.

3. Procédé de production de particules de nitrure d'aluminium sous revêtement de verre selon la revendication 1 ou 2, dans lequel, dans la première étape, outre les particules de nitrure d'aluminium et la composition en poudre comprenant le composant de verre, des particules de nitrure de bore présentant un volume cumulé d50 de 0,3 à 30 *µ*m sont ajoutées et mélangées.

4. Procédé de production de particules de nitrure d'aluminium sous revêtement de verre selon la revendication 3, dans lequel, dans la première étape, les particules de nitrure de bore ont un rapport de 0,1 à 10,0 parties en poids par rapport à 100,0 parties en poids des particules de nitrure d'aluminium.

5. Procédé de production de particules de nitrure d'aluminium sous revêtement de verre selon l'une quelconque des revendications 1 à 4, dans lequel la deuxième étape est réalisée sous une atmosphère qui ne comprend pas de gaz d'oxygène.

6. Procédé de production de particules de nitrure d'aluminium sous revêtement de verre selon l'une quelconque des revendications 1 à 5, dans lequel le traitement thermique de la deuxième étape est dans une plage de 400 à 1 000 °C pendant 30 minutes à 3 heures.

7. Procédé de production d'une composition de résine de dissipation de chaleur, caractérisé en le mélange des particules de nitrure d'aluminium sous revêtement de verre obtenues par le procédé de production selon l'une quelconque des revendications 1 à 6 et d'une résine.
